# EUROPEAN PATENT APPLICATION

(11) **EP 1 404 144 A1**
(43) Date of publication of application: **31.03.2004**
(21) Application number: 03255819.9
(22) Date of filing: 17.09.2003
(51) Int. Cl.: H04Q 7/38

(54) **Anti-Synchronous radio channel slicing**

(30) Priority: 24.09.2002 US 252549
(71) Applicant: Nokia Corporation, 02150 Espoo (FI)
(72) Inventor: Walsh, Rod, 33580 Tampere (FI); Hakulinen, Harri, 33950 Pirkkala (FI)
(74) Representative: Read, Matthew Charles

(57) **Abstract**

Aspects of the invention enable mobile wireless terminals to perform fast handover without packet loss, network buffering and uplink signaling in cellular communication systems. Further aspects of the invention prevent the loss of data that is often associated with communication errors introduced into wireless data communication transmissions, particularly errors associated with the handover of cellular communications. The invention may include the use of a time slicing and scheduling technique for redundantly transmitting data over multiple channels. In accordance with this aspect of the invention, each redundant copy of a respective group of data may be sent over a different channel at different times, thereby enabling the portable device to acquire lost data or to replace data containing an unacceptable amount of error. The invention may implement resource scheduling for managing the transmission of the data groups at the appropriate times to increase the likelihood that a data group will be received over at least one channel without interruption. In addition, the portable device may be provided with information describing the transmission schedule for tuning, at the appropriate time, to the transmitter of the cell on which the data is being retransmitted. The system may also be implemented to control the transmission of data over alternative multi access systems.

## Description

### FIELD OF THE INVENTION

This invention relates generally to wireless communication. More specifically, the invention relates to systems and methods for performing cellular communication handover techniques and error correction techniques.

### BACKGROUND OF THE INVENTION

Portable communication devices, such as mobile phones, personal data assistants and the like, have gained wide popularity as wireless communication performance has improved. Nevertheless, intermittent signal degradation and loss of network connection is still a concern. Particularly troublesome is the introduction of error as a portable device moves through the coverage area of a wireless communication network and the connection between the device and the network is handed over from one transmitter to the next.

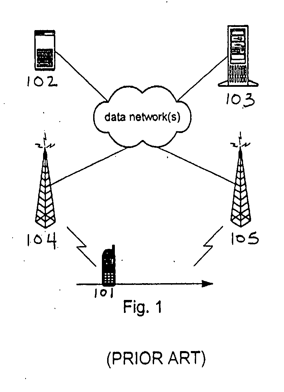

Figure 1 depicts a simplified illustration of a conventional mobile communication network. In this example, a portable telephone 101 receives a stream of data from, for example, a home network device 102 and a corresponding node 103 of the data network while moving from the coverage area of one cell 104 to that of another 105. As the mobile phone leaves the coverage area of a first cell and enters that of a second, the signal strength of the original connection may weaken or the error count may reach unacceptable levels, for example, requiring that the connection be handed over from the transmitter of the original cell to the transmitter of an adjacent cell. Otherwise, the connection to the network may be lost.

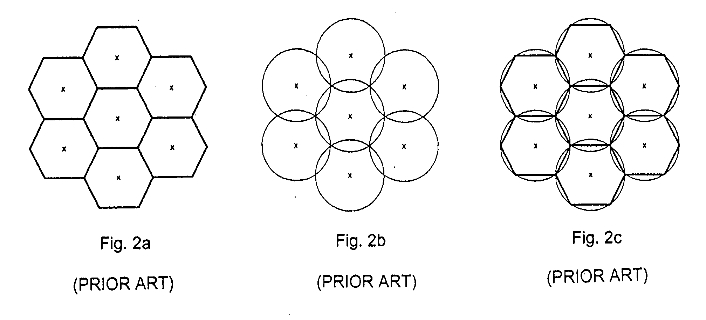

Figures 2a-2c provide a simplified illustration of coverage areas associated with a conventional cellular network. Figure 2a depicts the coverage areas of cells in a network in which no overlap between cells exist and the portable device is instantaneously handed over from one cell to another. Because such handovers often cannot be achieved without interruption of the connection to the network, connections are typically handed off while the portable device is located within the coverage areas of multiple cells. Figures 2b and 2c depict cells for which overlap exists between the coverage areas of adjacent cells. By ensuring that the alternative connection is acquired before the original connection is relinquished, the transition of the connection from one cell to the next may occur smoothly.

Handover of wireless cellular communications typically occurs in three stages. First, measurements are taken of communication performance to determine the likelihood of losing a network connection, which may include measurement of the signal strength of the received signal or of the rate of error found in the received data. In the second stage, algorithms may be executed to evaluate the measurements indicative of communication performance. Where the measurements associated with the current connection fail to meet required criteria, execution of handover from the cell of one coverage area to that of another may be undertaken.

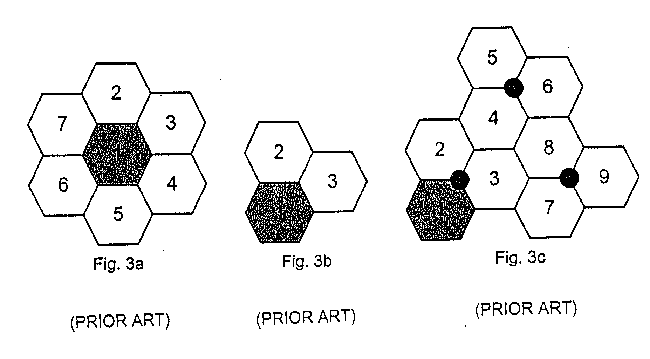

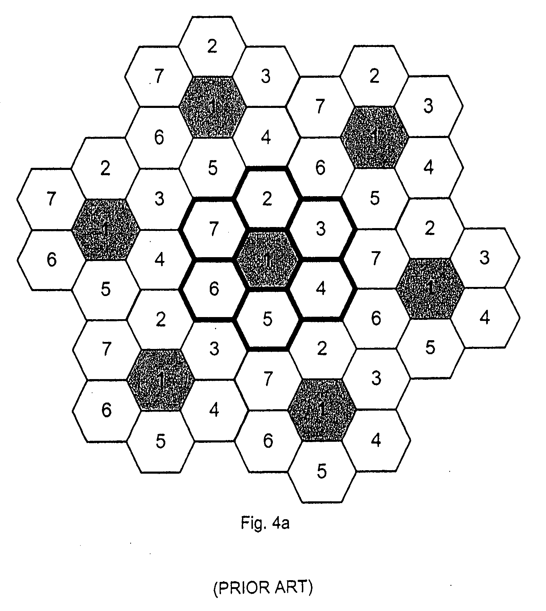

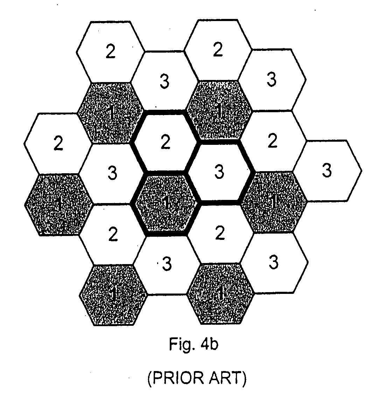

Further complicating matters, networks often reuse resources, including channels, spreading codes, and the like. Particularly well known is the reuse of channel frequencies within the network, whereby the same frequency band is used by two or more cells located a sufficient distance apart so that the transmissions do not interfere. This reuse concept is similarly applicable to the use of spreading codes. Figures 3a-c show some common cell resource reuse patterns. Fig. 4a-b provides a simplified illustration of the use of two of these reuse patterns. Fig. 4a presents a simplified illustration of a network using a large number of channels; seven channels for each of the areas of the seven reuse patterns. In this example, the distance between coverage areas using the same channel is spaced apart by the coverage areas of at least two intervening cells. Fig. 4b is a simplified illustration of a network in which a small number of channels are used; three channels are used for each of the seven coverage areas depicted. As a result, cells using the same resource are physically closer together and are more likely to interfere with each other. Therefore, resource reuse may itself cause the loss of data if not managed effectively.

To avoid reuse interference and to improve handover, the management of radio resources, such as channels in TDMA systems, is known. In 3G systems, such as UMTS, the RNCs (Radio Network Controllers) perform this function. Because some resources are time variant they can be managed using time scheduling techniques. For example, TDMA slots vary over time. Also, services may vary over time on a single CDMA code.

One management technique for controlling the transmission of data is known as the "time slicing technique." The time slicing technique divides a logical radio channel into time slices. The incoming service data is divided, as far down as to individual PDUs, and inserted onto these time slices, or slots, within a channel. In other words, data in a data stream may be divided into segments, may be grouped into service groups such that services are tailored for individual users or groups of users having similar service requirements, inserted into a channel at specific times, and transmitted by a transmitter to the receiver of a portable device. The transmissions of data streams may occur in bursts of data, with idle times between transmissions of any stream. By signaling the portable device which services will be delivered on a particular slice, the portable device is able to predict which slices of time the radio channel will be of interest to it (i.e. when the radio channel carries services the portable device needs). Thus, the portable device is able to power-down its radio front-end while the channel of the cell in which it is located is not transmitting data of interest.

Further work has proposed the use of time slicing for faster handover in broadcast environments. This technology uses the previously described period in which the channel is not transmitting data of interest to tune to other radio channels and analyze them for useful data. Useful data may include an indication of which other cells near the portable device are available, the signal quality of those cells, and the services offered there. Faster handover is possible as the portable device takes advantage of the availability of this information to compile and maintain a list of candidate cells for which a handover is available. Creation of this list reduces the handover execution time as much as a full frequency scan. Moreover, the service announcement/notification process may be avoided.

Several of the IETF Mobile IP techniques try to correct or prevent data loss due to handover. For example, fast handover reduces the time between connections and, thereby, reduces the window of time while packets are lost. Smooth handover buffers data in the old cell/router and forwards this to the new cell/router once the new connection has been established. Seamless handover transfers connection information from the old cell to the new so that lengthy signaling is not needed between the portable device and the network. Unfortunately, such systems are complicated by the fact that duplex (bi-directional) signaling is required. Also, even in these techniques, packets may not be received during the handover. As a result, time-sensitive applications may suffer a non-negligible "glitch" in data reception.

There is a need in the art to provide a simplified yet effective system and method for recovering data lost to errors in wireless communications and/or improving handover without necessitating bi-directional signaling or greatly reducing the available bandwidth. When performing standard handover over a channel data packets may be lost during the period in which the portable device has no radio connection to either cell and until the network begins routing packets to that new cell. This leads to deteriorated quality of services to the user. There is also a need in the art for improved time slicing techniques in which the scheduling of data is performed so as to improve handover and to enhance error correction with minimal effects on available bandwidth.

### SUMMARY OF THE INVENTION

Aspects of the invention prevent the loss of data that is often associated with communication errors introduced into wireless data communication transmissions, particularly errors associated with the handover of cellular communications as a portable device moves between coverage areas of adjacent cells in a cellular network. One aspect of the invention involves the use of an improved time slicing technique involving the scheduling of redundant transmissions of the same data over multiple transmission areas. Aspects of a time slicing communication and scheduling technique may involve dividing sets of data into discrete subsets or groupings, and transmitting the sets of data over multiple channels. In accordance with this aspect of the invention, each redundant copy of a respective group of data may be sent over a different channel at different times, thereby enabling the portable device to acquire lost data or to replace data containing an unacceptable amount of error. Smoother handover and improved error correction may be accomplished if, while the portable device is connected to multiple transmitters, the portable device may receive data on more than one connection.

A further aspect of the invention involves resource scheduling for managing the transmission of the data groups at the appropriate times to increase the likelihood that a data group will be received over at least one channel without interruption. In additional aspects of the invention the portable device is provided with information describing the transmission schedule to enable the portable unit to tune, at the appropriate time, to the cell on which data received in error is being retransmitted. A further aspect of the invention involves tuning the portable device to alternative cells to receive information while the radio channel of the cell in which it is located is not transmitting data of interest to the portable device. In yet further aspects of the invention, the system is designed to control the transmission of data over alternative multi access systems, including systems employing CDMA, for example.

### BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:
FIG. 1 shows a simplified depiction of the transmission of information to a portable device moving between the coverage areas of cells in a cellular network.
FIG. 2a illustrates a simple network structure in accordance with an exemplary embodiment of the invention depicting circular cell coverage.
FIG. 2c illustrates a simple network structure in accordance with an exemplary embodiment of the invention depicting a hexagonal cell model.
FIG. 2b illustrates a simple network structure in accordance with an exemplary embodiment of the invention depicting circular cell coverage with a hexagonal cell model super-imposed.
FIG. 3a illustrates a seven cell resource reuse pattern.
FIG. 3b illustrates a three cell resource reuse pattern.
FIG. 3c illustrates a three cell, nine resource reuse pattern.
FIG. 4a illustrates a seven cell resource reuse pattern implemented in a subset of cells within a network.
FIG. 4b illustrates a three cell resource reuse pattern implemented in a subset of cells within a network.

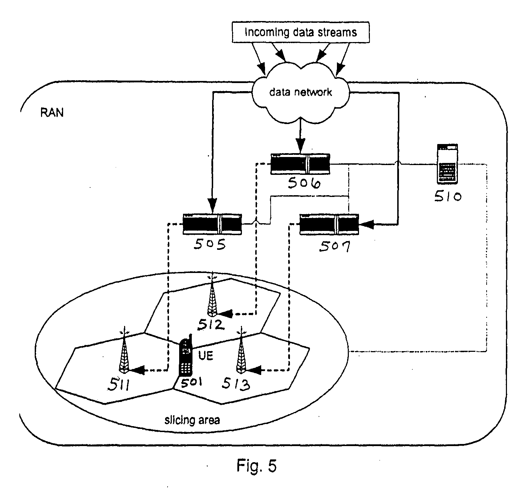

FIG. 5 depicts a network environment in which an exemplary embodiment of the invention may be employed.

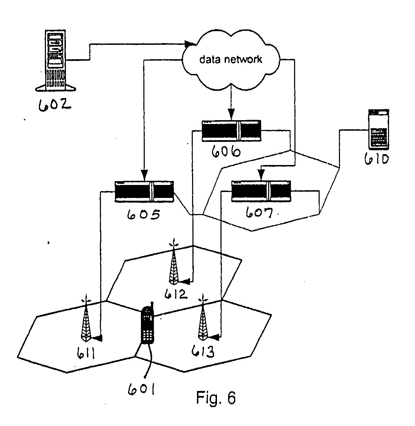

FIG. 6 depicts a Mobile IP network environment in which an exemplary embodiment of the invention may be employed.

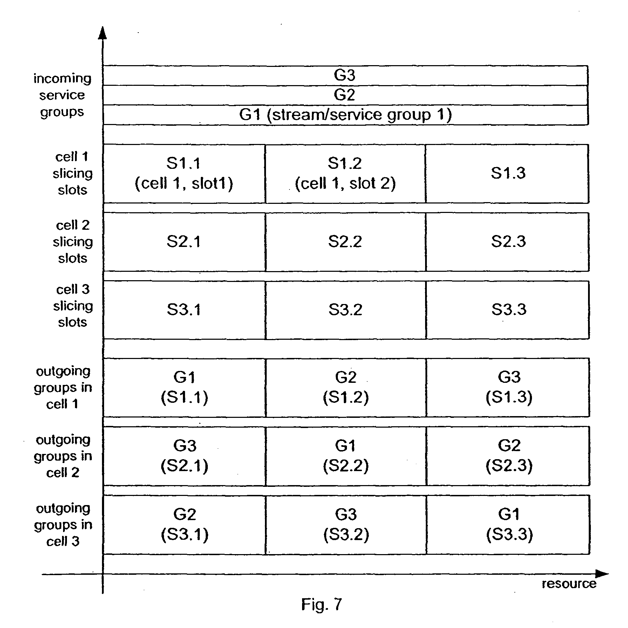

FIG. 7 illustrates an exemplary time line showing a transmission pattern for the case of transmitting to three cells within the network with a repeating pattern of three constant and regular slots.

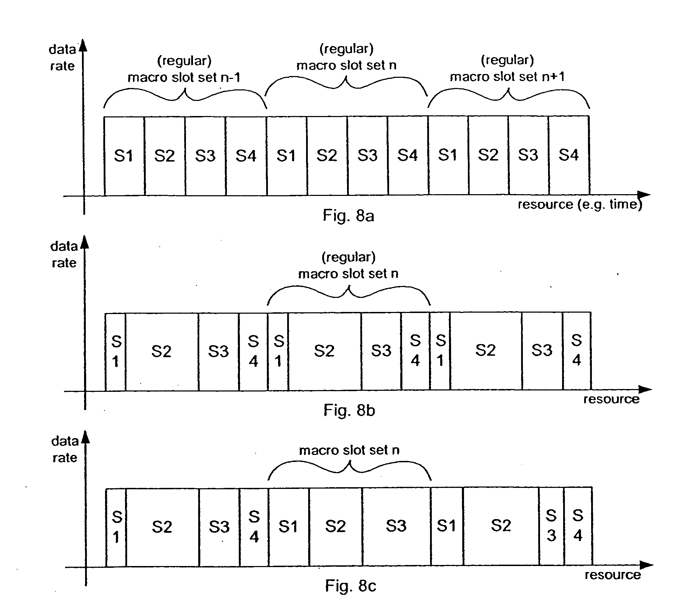

FIG. 8a illustrates an exemplary embodiment of the invention employing a constant and regular repeating slice pattern.
FIG. 8b illustrates an exemplary embodiment of the invention employing a regularly repeating slice pattern comprised of slots of varying duration.
FIG. 8c illustrates an exemplary embodiment of the invention employing a variable slice pattern within a repeating macro slot set.

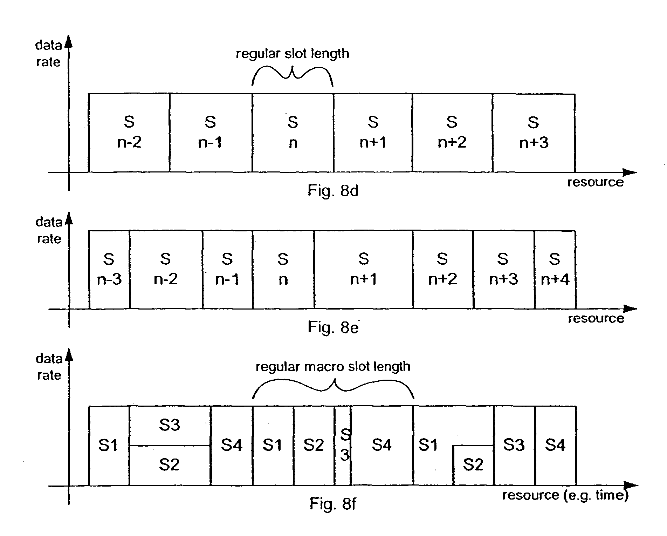

FIG. 8d illustrates an exemplary embodiment of the invention employing a pattern of constant slicing with no repeating aspect.
FIG. 8e illustrates an exemplary embodiment of the invention employing a pattern of variable slicing with no repeating aspect.
FIG. 8f illustrates an exemplary embodiment of the invention employing a mixed pattern of slicing including slice channel sharing.

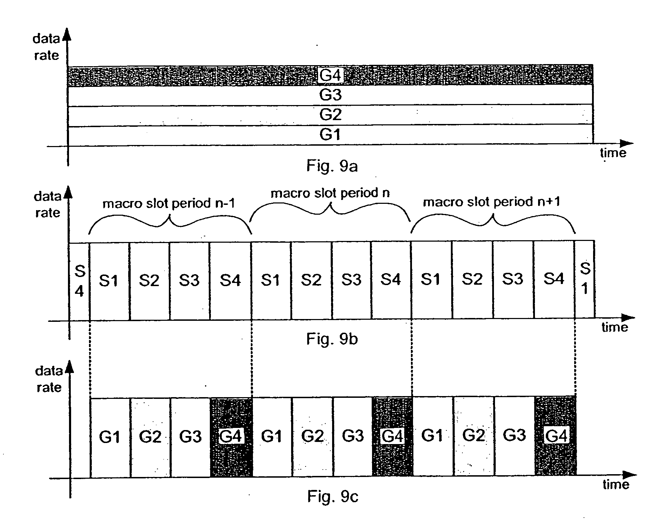

FIG. 9a illustrates an exemplary embodiment of the invention dividing the received data into a simple four service group link with a constant and equal data rate.
FIG. 9b illustrates an exemplary embodiment of the invention employing a slice pattern including four regular slots per macro slot set and using slots of an equal duration.
FIG. 9c illustrates an exemplary embodiment of the invention mapping four constant and equal service groups onto four regular and equal time slices.

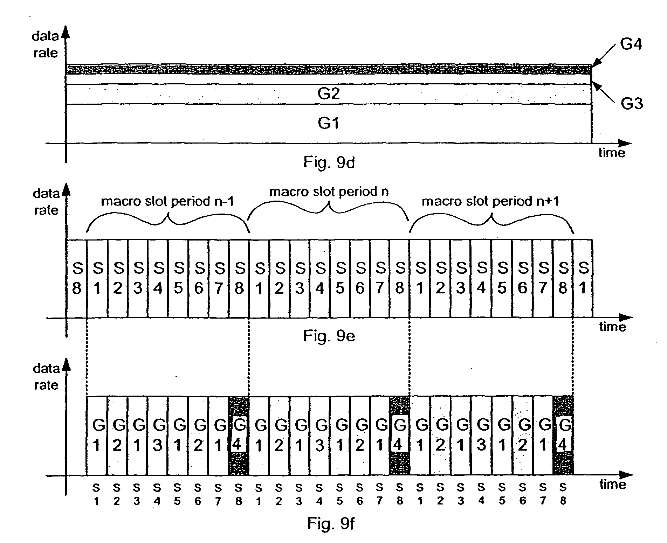

FIG. 9d illustrates an exemplary embodiment of the invention dividing the received data into a simple four service group link with a varying data rate.
FIG. 9e illustrates an exemplary embodiment of the invention employing a slice pattern including eight regular slots per macro slot set and using slots of an equal duration.
FIG. 9f illustrates an exemplary embodiment of the invention mapping four constant and differing service groups onto eight regular and equal time slices.

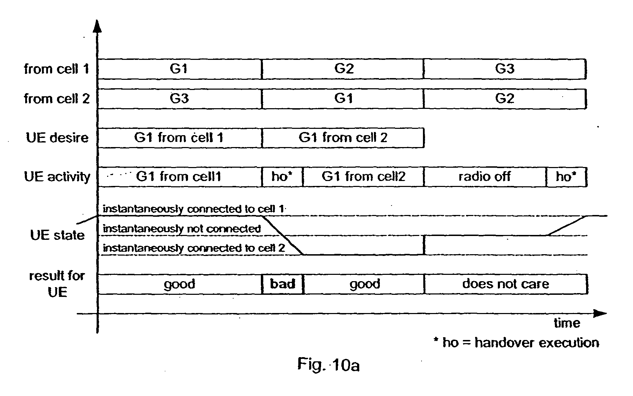

FIG. 10a illustrates non-instantaneous handover that might be encountered when attempting to transmit data over a fewer number of cells than the number of slicing slots available.

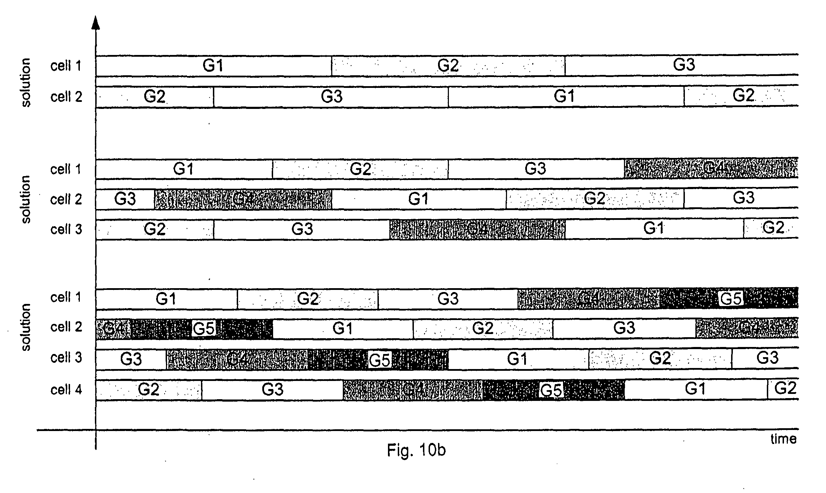

FIG. 10b illustrates exemplary embodiments of slicing patterns including a greater number of slicing slots than there are channels in which the particular groups are transmitted.

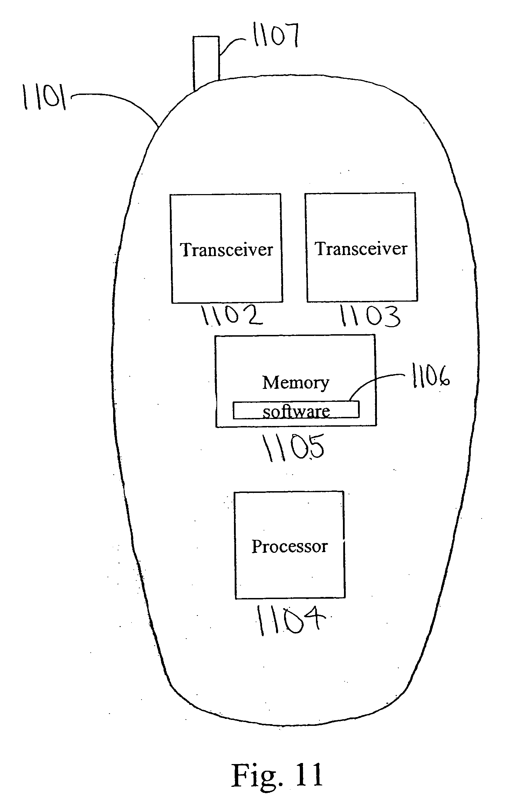

FIG. 11 is block diagram of a mobile telephone incorporating structure for performing various aspects of the present invention.

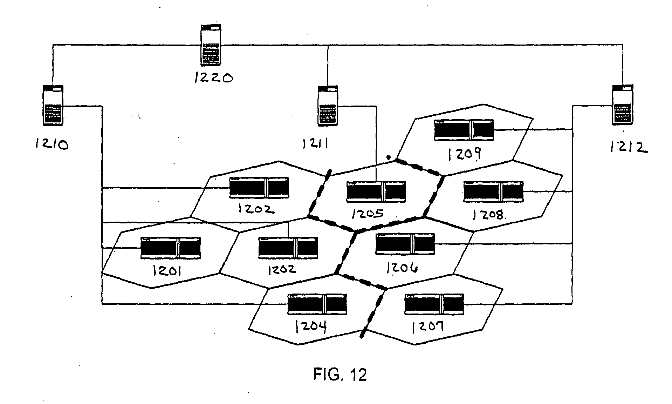

FIG. 12 is an example of a hierarchical network environment in which an exemplary embodiment of the invention may be employed.

### DETAILED DESCRIPTION OF THE INVENTION

FIG. 5 shows a system employing aspects of the invention incorporated in a Radio Access Network (RAN). A portable device 501, which may include a cellular telephone, or any transportable unit capable of communicating over a mobile communications network, moves between the coverage areas of cells within a wireless network necessitating handover. Incoming data streams received by the network are transmitted to resource slicers 505, 506, and 507. Slicers 505, 506, 507 buffer the data for delivery on the channel of the corresponding cell at times to be determined in accordance with a delivery management algorithm. In this embodiment, each slicer divides the data stream, and groups the data into service groups, subsets of data which may be related, for transmission to the portable device.

The service groups may be arranged such that the data from the streams are arranged into groups that benefit from being delivered in the same slot. For example, video stream data and the audio stream data corresponding to that video may be grouped together for transmission.

The slicing area manager 510, having selected the appropriate slicing, may then synchronize the delivery of data groups by transmitting stations 511, 512 and 513, using at least a processor and one of any number of delivery management algorithms, such that a data group is transmitted at a different time on each of the cells proximate the portable device. Slicing area manager 510 may select the channels for which delivery of the stream of data is desired. Thus, the slicing area manager 510 schedules the delivery of data to ensure that service groups are transmitted "anti-synchronously." Note, the functions of resource slicers 505, 506, and 507, and slicing area manager 510 are logical and they may be deployed in one or more physical devices in one or more locations. For instance, one possible embodiment includes use of a slicing area manager that may be a distinct server which continuously co-ordinates and groups the slicing patterns, communicates information necessary for coordinating and grouping the slicing patterns to the resource slicers, which may each be distinct servers, that then perform the actual user data slicing as this data arrives to the resource slicers. In another embodiment, the slicing area manager and multiple resource slicers may be incorporated within a single physical device and both grouping and slicing may be performed within that device, with data output to each of the served cells. In a further embodiment, there may be several resource slicers in distinct physical devices and some, or all, of these devices may also be capable of performing the slicing area manager function - the choice of which of these devices performs this function would be subject to an arbitration algorithm (e.g. lowest MAC address or a device which is operating correctly takes the function). In all of these cases, buffering at the resource slicers may be necessary as incoming user data may arrive at the slice area manager and resources slicers (roughly) simultaneously, so there may be a delay while the slicing area manager analyses the incoming data and signals new slicing instructions to the resource slicers.

A slicer may comprise a network device for receiving incoming data, and may include one or more processors and a buffer, such as a first-in, first-out (FIFO) buffer, a ring buffer, a dual buffer having separate input and output sections, or any memory device for buffering received data. The divided or grouped data to be transmitted to the portable device may be formatted for transmission by using, for example, a multi-protocol encapsulator in accordance with Section 7 of European Standard EN 301192 *"Digital Video Broadcasting (DVB); DVB specification for data broadcasting."* Alternatively, the buffer used to store the data until the appropriate time for transmission can be integrated with a multi-protocol encapsulator to comprise a single device (not shown). The encapsulated contents of the multi-protocol encapsulator may be sent to a digital broadcast transmitter for broadcast to the digital broadcast receiver as a time-slicing signal as described in greater detail below.

In one embodiment, involving a digital video broadcast television (DVB-T) network in a mobile environment and employing a dedicated multiplex, for example, the MPEG data transport stream may transmit at a rate of 12 Mbps, 10.5% of that data corresponding to Mbps IP data. Assuming, for purposes of illustration, a homogenous service mix of all IPTV data transmitting at 82 kbps and transmitting over two signaling channels at a transport stream rate of 100kbps (e.g., one for DVB-SI and one for content specific service guide), then the system may operate 118 IPTV channels and two signaling channels. Where the macro slot spans 60 seconds and the micro slot is five seconds, data may be grouped in 10x100 kbps (1 Mbps) feeds and bursting at 12 Mbps for five seconds. The transmission rates and time allocated for slots and/or macro slots may vary depending on radio type and configuration, network topology and diversity, and the dynamics of the service mix.

The portable device 501 may include a digital receiver (not shown). The receiver receives the signal on a selected channel, and may strip off the encapsulation of the information signal added by a multi-protocol encapsulator, where necessary. The data may be reconfigured, as necessary, for presentation, storage, or other uses by the user of the portable device. For networks in which the portable device communicates with the network over a bi-directional link, the portable device may also include a transmitter, or incorporate both transmission and reception functionalities in transceiver.

For smoother handover, the portable device may be connected to a new cell before the connection to the original cell is lost. While connected to both cells, the portable device may receive data on either connection. In such a case, the portable device may receive the data transmitted in the slices of each channel, and may store the data for processing or the data may be restructured by the portable device dynamically. This enables the combined benefits of Mobile IP fast, smooth and seamless handover (there is no time when the connection is unavailable, no packages are lost - even without network buffering, and air-interface signaling and delays are not necessary).

To perform error correction, the portable device may retrieve a lost segment of the original data stream containing error by tuning to an alternate channel also transmitting that segment, but at a different time. For example, in an active error correction mode, the portable device may maintain multiple connections to multiple cells. If error is detected on one connection, the portable device may obtain the same segment of data on an alternative channel to which the portable device is currently connected. The erroneous data may be discarded in favor of the data received without error.

Alternatively, data correction may occur in a reactive error correction mode. In this mode, the portable device may establish a new connection or connections with alternate channels. Thus, if error is detected in the portion of data received over a first connection, the portable device may obtain the same data at a different or later time on an alternative channel to which it establishes a connection and tunes after the received error. Furthermore, any method for which error correction is achieved by repeating the transmission of data on alternate channels and extracting that data is within the scope of the present invention.

To recover lost data, the portable device must determine the times and channels in which particular data is to be transmitted. In one exemplary embodiment, simple notifications may be sent to the portable device from resource slicers, managers or other network devices, identifying, for each cell, the data to be transmitted in each of the "n" slices. A notification of the times at which a group will be transmitted might include the duration of a burst, the period between bursts, the time period between the transmission of one burst and the beginning of transmission of a next, combinations thereof, or any such representation of time that might serve as notification. The notification may be included in an Internet protocol packet, a multiprotocol encapsulated frame, any other packet form, 3G or GPRS channel or modulation data, or using any technique from which the schedule or pattern may be determined. In an alternative embodiment, an intelligent portable device might include the ability to initiate a request-response corresponding to the long-term schedule for a plurality of cells in a network. Another alternative, as might be implemented using an algorithm stored in memory or designed into the hardware of a processor, is for the device to learn the pattern where there is consistency in the slicing. In a further alternative, retransmissions of data may occur at fixed times, such that the portable device may know that the same data will be retransmitted on the channels of adjacent cells at fixed periods, such as multiples of a fraction of second from the time of the original transmission. In that case, the portable device may not require the transmission of notification information, but may know in advance that the system employs a fixed pattern, such that retransmissions will always take place at fixed periods over predetermined channels. Where system efficiency is of less concern, the portable device may be controlled to scan local channels periodically.

Once the portable device determines the channels and times at which the data is to be transmitted, the portable device may selectively retrieve particular data by tuning to the designated channel at the predetermined time of transmission. At the appropriate time, the portable device switches on the radio front-end and tunes to the designated channel.

FIG. 6 depicts an example of a mobile IP network environment in which an exemplary embodiment of the invention may be employed. In the illustrated embodiment, portable device 601 moves about a mobile IP network. Data may be transmitted from a corresponding node 602 through the network to radio resource slicers 605, 606 and 607. The slicers may divide the radio resource, time slots in a TDMA network, for example, into slices for transmitting data from the received stream. The data is divided and/or sorted into groups of data for transmission to the portable device 601. According to an algorithm for controlling the transmission of groups within slices, the slicing area manager 610 schedules the transmission of the groups of data. The algorithm may operate to control the transmission of each group of data on each of at least more than one of the channels while scheduling the transmission of one group of data over each channel at different times, or at substantially nonoverlapping times. The slicers 605, 606, 607, buffer the data of each group and release the data to a respective transmitter 611, 612 and 613, according to the schedule determined by the slicing area manager. The transmitters transmit the data over the coverage area of a corresponding cell, for reception by the portable device 601. Thus, in a manner similar to that described with respect to transmission over a radio access network, aspects of the resource management technique of the present invention may be implemented in a variety of networks, including mobile IP networks, to provide improved error correction and handover techniques.

Although Figures 5 and 6 have provided illustrations of the present invention for which a specific number, arrangement, and functionality of components have been described, variations in the selection, composition, number, arrangement, and operation of components depicted are well within the scope of this invention. For example, the embodiment of Figure 5 has been described as employing a slicer for each cell. However, any number of slicers may be used in accordance with the desired network design, or as driven by such factors as cost or performance. For example, a single slicer may used to buffer the delivery of data on the appropriate channels. Moreover, the number of slicers may also be determined in accordance with a preferred slicing technique; a description of how specific slicing patterns for implementing such slicing techniques follows.

Figure 7 depicts an exemplary resource allocation technique, illustrating a simple three resource slicing pattern, which may be implemented as a delivery management algorithm. As illustrated, the time in which data may be transmitted over each of the three channels of three cells, is divided into equal slices of time. As shown in Figure 7, the incoming data has been divided into three groups of data, and each group is transmitted on each of the channels. For example, as shown in Figure 7, S1.2 represents the second of three slices of time at which a data group will be carried on channel 1, the channel of a first cell. Similarly, S2.3 represents the third of the three slices of time on which data is to be carried on channel 2. S3.1 represents the first of three slices of time on which channel 3 is scheduled to carry information.

Figure 7 further illustrates a simplified embodiment of a slice pattern for scheduling the transmission of each data group over different channels at different times. As depicted, data group G1 is scheduled for transmission during the first slice of channel 1, during the second slice of channel 2 and during the third slice of channel 3. Data group G2 is scheduled to be transmitted during the second slice of channel 1, during the third slice of channel 2 and during the first slice of channel 3. Finally, data group G3 is scheduled for transmission during the third slice of channel 1, during the first slice of channel 2 and during the second slice of channel 3. As illustrated, the various data groups are redundantly transmitted over three of the channels of a network at different times.

In one embodiment, the number of groups or divisions into which the incoming stream of data is to be divided may be determined based on the number of channels onto which the data may be transmitted. In the example of Figure 7, three channels are selected for transmission of the same data and three slices of time are allocated on each channel. Accordingly, incoming data was divided into three data groups. However, the division of data and the number of channels or slices to be utilized may be determined in accordance with the desired system performance and/or performance factors. Such factors may include the signal strength of each neighboring channel associated with a portable device, the delay associated with the receiver "powering on", allowed service latency (e.g. buffering or timeliness limitations), correlation between data or data groups, and may others. Moreover, while Figure 7 depicts the slices as occupying continuous blocks of transmission time for each channel, one slice immediately following another, the slices within a channel may be offset from one another, and varied in a manner consistent with the constraints of the system and the service mix provided. Moreover, grouping and the transmission of data may depend on whether the channel is performing only time slicing, whether it has a fixed or varying bandwidth allocated to other items (e.g. traditional TV for DVB-T). or whether the channel has some other time related use of the same channel.

Figures 8a-8f illustrate further examples of different slicing patterns that may be employed consistent with aspects of the invention. Each figure depicts the transmission of data comprised of multiple sets of data over a single channel. The incoming data has been divided into segments or groups, for example, for insertion into corresponding time slots of the channel. A set of slots into which the groups of data are to be inserted, S1-S4 shown in Figure 8a, is herein referred to as a macro slot set. A simple, regular and static assignment of slices presents the simplest implementation, enabling efficient power consumption, prediction, and usage, and providing reliable transmissions with minimal development costs. On the other hand, a fully dynamic slot assignment scheme enables greater flexibility in services, providing bandwidth efficiency even if data streams are less predictable. In the illustrated examples, the data rate often remains fixed while the number of slices, and the length of time of each slot may be fixed or may vary. As noted, time slices may or may not be regular. Thus schemes, and slicing patterns, may vary from those which employ a rigid timetable to those which just consider the current and next slices.

As noted, Figure 8a depicts a three slice pattern including three sets of slices for transmitting data, or macro slot sets, each set comprised of four slices of channel time over a single channel, S1-S4. In this exemplary embodiment, the slices are each of equal length and the regular pattern repeats. Figure 8b illustrates a similar embodiment also including regularly repeating macro slot sets, however, in this example the duration for slices S1-S4 vary, which may depend on the data rate, for example. While the resource, time in this instance, has been described as varying from slice to slice, the data rate also may vary.

Figure 8c illustrates an example of a variable slice pattern within a regular repeating macro slot. Figure 8d provides an example of a pattern of constant slicing with no repeating aspect. Figure 8e provides an example of a pattern of variable slicing with no repeating aspect. Figure 8f provides an example of mixed patterns including simultaneous slice channel sharing.

Figures 9a-9f depict slicing patterns which may be suited for use in an IP network, which may include, for example, IP Datacast products. The slicing patterns illustrated are of a simple nature, including regular and static slices. In the first variation illustrated in Figures 9a-9c, the received data is divided into four data groups, G1-G4, of equal data rates. Three sets of slices, macro slot periods, for transmitting data over a single channel are illustrated. The macro slot sets depicted are each comprised of four slices of channel time, S1-S4. In the exemplary slicing pattern illustrated in Figures 9b and 9c, the slices are of equal length and unchanged from one macro slot set to the next.

In the second variation, illustrated in Figures 9d-9f, each slice is of equal length, however, a greater number of slices are included in each macro slot set. In this exemplary embodiment, the amount of data contained in data groups G1, G2, G3 and G4, differ. Because there is a greater amount of information grouped together to form G1 and G2, than is found in G3 or G4, a greater number of slices may be used to transmit the larger groups of data over the equally sized slots. In this embodiment, the macro slot set is divided into eight slices, S1-S8. Thus, in any given macro slot set, eight slices are used to transmit all of the information, G1-G4, over a single channel. In this embodiment, every other slice in each macro slot set contains a slot in which data corresponding to data group G1 is transmitted, four in all to transmit the largest data group. Data corresponding to data group G2 occupies two slots in each macro slot set, and data corresponding to G3 and G4 data each occupy one slot.

Determination of cell overlap, and therefore the slicer area overlap, in the exemplary embodiments illustrated, may be impacted by system constraints. For example, a portable device moving between cells might be without a network connection for 200 ms, while the mobile device retunes to the new channel and begins decoding. During that time, the data (service group or groups, for example) transmitted in the cell for which the signal quality of the connection is deteriorating may not be received. In that case, the time slot or slice in which that data is to be transmitted in a neighboring cell may be offset in time, for example, at least 200 ms removed from the time at which the data was transmitted in the previous cell to which the portable device was connected. In the illustrated embodiments, retransmission of data in accordance with an antisynchronous slicing pattern provided enables data to be delivered on non-simultaneous slices. Loss of data may be further reduced through the use of offsets between slices. The offset period may be determined in accordance with the time required to tune a portable device to an alternate channel, to minimize the likelihood that handover will interrupt reception of data over a subsequent slice.

In some instances, it may be necessary or preferred to allow the transmission of a grouping of data in slices to partially or completely overlap the transmission of the same grouping of data in other cells. The complexity of arranging a large number of cells and/or oddly shaped cells may render the absence of slice overlap unfeasible. For example, the use of multiple cell coverage in all areas for providing smoother handover and error correction may make it difficult to insure that only some of the cells avoid slice overlap. Similarly, the lack of viable candidates for handover due to unfavorable network topology and the like may result in the use of a slice pattern employing fewer channels than slices.

FIG. 10a illustrates the loss of data that might accompany non-instantaneous handover. As the name suggests, non-instantaneous handover is the execution of a handover procedure in which the connection to the channel of one cell is lost and some time passes before the connection to the channel of the next cell has been established. In the illustrated example, data is transmitted over a fewer number of channels than the number of slicing slots available which may occur if fewer channels are available due to a change in network performance, for example. As illustrated, where handover is undertaken while the portable device is receiving data, all or a portion of that data may be lost. In the illustration, during the time that the connection to cell 1 has been lost and the connection to cell 2 has yet to be established, no data is received by the portable device. As a result, if data corresponding to data group G1 transmitted during a first slice from cell 1 is lost or contains error, the portable device may not be able to replace that data group with G1 transmitted during the second slice from cell 2, if non-instantaneous handover prevents the portable device from receiving all of the data in that second slice. Thus, the transmission of the same data group on two overlapping (in time) or adjacent (contiguous) slices of two adjacent channels may diminish the benefits associated with the error recovery using redundant transmission method of the present invention.

Figure 10b illustrates one exemplary solution to this problem. Specifically, in this embodiment, the number of slices are greater than the number of neighboring cells to coordinate. Accordingly, by staggering slots such that no one slice ends at the same time the next slice on an adjacent cells begins, data for any one group may be obtained on an alternative channel even if non-instantaneous handover occurs between slices. For example, in the two cell system illustrated, for which three groups of data are to be transmitted, initiation of the transmission of each data group over each channel occurs asynchronously. Thus, as illustrated, when the transmission of G1 over the channel of cell 1 is complete, cell 2 continues transmission of data of another group over the remainder of the slice. The transmission of G1 over the channel of cell 2 does not occur until at least half a slice length subsequent. Thus, even if non-instantaneous handover occurs during the first slice of cell 1, resulting in the loss of at least a portion of data associated with the first transmission of G1, the portable device may receive the redundant broadcast of G1 well after handover has been completed. The remaining illustrations of Figure 10b, depicting transmissions over three and four cells, respectively, present further examples of transmission schemes for staggering the transmission of slices of data.

While the use of time slicing in accordance with a time division multiple access technique has been described in conjunction with wireless digital networks, including radio access networks and those performing mobile IP, aspects of the invention may be incorporated into or implemented in other network types and other forms of division multiple access. For example, the particular mobile access technique employed may be selected depending on the network type, and therefore, on the resource or resources requiring efficient allocation. In TDMA systems, time slots are finite resources. In the CDMA technique, the receiver follows the frequency of the transmitter based on a defined pattern known to both based on the selected code, so only a receiver whose frequency response is programmed with the same code can receive the transmission. Thus, in CDMA systems, the number of codes is limited. In orthogonal frequency divisional multiplexing ("OFDM") systems, while numerous, only a finite number of orthogonal frequencies are available. Similarly, with respect to spread spectrum CDMA techniques, such as frequency hopping (including short range communication techniques including Blue Tooth) or direct sequence CDMA, a limited number of frequency channels or spreading codes exist. Thus, aspects of the invention described in conjunction with the allocation of time as a resource, such as that using time slicing as a division multiple access, may alternatively be employed on other forms of division multiple access, and transmission power as in UTRA/W-CDMA. For example, resource allocation of spatial, frequency and code based division multiple access resources may be employed in a manner consistent with the spirit of the invention. Combinations of multiple access techniques may also be employed consistent with the invention described.

For example, a spreading code used in conjunction with a CDMA technique may be of a different length from that of another spreading code, thereby allowing the use of a different data rate. As with time slicing techniques, the length of the slice may be fixed or may vary from one slice to another in a set.

For example, Universal Mobile Telecommunications Service (UMTS) uses W-CDMA (wideband code division multiple access) which separates channels according to spreading codes using the same frequency band and time/space for all channels in the relevant network. Aspects of the present invention may be used to co-ordinate the transmission of data in accordance with different spreading codes in different neighboring cells, allowing the portable device to receive the data of a particular group according to the frequency patterns associated with each of a plurality of codes. In other words, transmission of data over multiple channels may be achieved by transmitting each group of data over the frequencies associated with several codes.

Many network systems employ a number of techniques to maximize the use of spectrum and so more than one type of radio resource allocation is needed in these systems. For example, digital video broadcast television (DVB-T) networks may require frequency and modulation hierarchy resources, and may also include time resources if time slicing is used. Thus, the resource management technique of the present invention may be used in the allocation of each resource of a particular network and/or transmission technique.

In systems employing the anti-synchronous transmission of data via connections between the portable device and the network, both the portable device and the network devices must be equipped to handle the transmission technique employed. The portable device may include additional structures to connect to alternative sources of information, neighboring channels in the TDMA technique, while connected to the original source or channel.

Figure 11 illustrates a mobile telephone, equipped with such additional structure. As shown, the mobile phone 1101 includes transceiver 1102, transceiver 1103, processor 1104, memory 1105, software 1106 stored in memory, antenna 1107; a keyboard, display, power supply while included are not shown. Transceivers 1102 and 1103 provide structure for connecting to alternative sources of information, such as multiple channels of a cellular network. An additional antenna may also be incorporated. Division multiple access techniques involving frequency and code slicing, for example, may require further modifications to the portable device including hardware and/or software modifications.

In one embodiment, mobile telephone 1101 may connect to multiple channels simultaneously to retrieve slices of data over different channels. Using transceiver 1102, for example, mobile telephone 1101 may receive each group of data transmitted in each slice of a first channel corresponding to a cell in which the telephone is located. The data may be processed 1104 and stored in memory 1105. If the processor 1104 detects error in the data of one or more of the groups, the processor 1104 may select reception of data via an alternate communication source. The alternate connection may be established over transceiver 1102, depending on the secondary resource selected, or using transceiver 1103. Equipped with information describing the scheduling of the transmissions of service groups over multiple channels at different slices in time, for example, the mobile unit may tune to a second channel to retrieve a group data received in error over a first channel at the time at which the group or groups required are retransmitted. While the embodiment illustrated in Figure 11 depicts a mobile telephone incorporating dual transceivers, any number of transceivers may be incorporated. Furthermore, a mobile telephone incorporating a single transceiver may also be used to perform reception of data on alternative channels.

While the embodiment illustrated in Figure 5 depicts a single slicing area manager for managing the distribution of data amongst the three slicers shown, the co-ordination functionality may either be centralized or distributed. A distributed system may be accomplished either physically or logically, at many alternative locations in the architecture. Distributed systems may be better suited for slice coordination of an area including a large number of cells. Given the expense associated with installing a large number of management devices, however, use of a more centralized management system may be preferred, particularly where the number of cells in a coordinated area is small. For a network with a large number of slicing areas, some of the slice coordination may also be performed network wide (i.e. hierarchical). The coordination may be hierarchical as well.

Figure 12 illustrates an exemplary embodiment in which a network slicing manager coordinates slicing area managers. The network slicing manager 1220 functions to effectively manage the use of resources to reduce error in the wireless communications of the network, particularly as devices navigate the boundaries of multiple slicing areas. In this embodiment, slicing area manager 1210, slicing area manager 1211 and slicing area manager 1212 are connected to respective resource slicers 1201-1209, as shown.

Each slice area manager coordinates the allocation of slice resources and, therefore, the selection of slice patterns. Any variation in the slice pattern may be selected as required to ensure successful communications. For example, the selected pattern may include slices of varying number or lengths. Furthermore, the number of slices in a set of slices may also vary, as may the offset intervals occurring between slices and the overlap in channel reuse.

The coordination of resource allocation between areas further may be complicated by incongruous slice pattern selection occurring on or between the boundaries of the coverage areas of the respective slice area managers. Thus, the slicing area managers 1210-1212 may each be operatively coupled to network slicing manager 1220. The network slicing manager 1220 co-ordinates the management of data transmissions to ensure the most beneficial scheduling of data transmissions particularly where adjacent coverage areas overlap. While the illustration depicts a hierarchical co-ordination scheme, alternate arrangements are well within the scope of this invention.

Slicing pattern selection and coordination may be implemented in a manner to adapt to variations in network topology. For portable devices moving through coverage areas quickly, the use of larger cells may improve network performance by, at a minimum, requiring fewer handovers, and thereby simplifying coordination. Where the network employs topologies in which multiple cells overlap, the number of preferred cell candidates, cells for which the redundant transmission of data may be utilized and handover successfully completed, may be of a large number. In that case, the likely candidates for transmitting and handing over the communication may be narrowed to a select few of these strong candidates, thereby simplifying coordination of handover. Arranging the cells in groups according to their overlap in slicing areas, for example, may further facilitate coordination. Where fewer cells are needed to maintain connections with portable devices, less channels, slices and fewer divisions of data may be required. Thus, slicing patterns may be chosen according to variations in system performance and/or network topology.

Similarly, where the signal strengths for adjoining transmitters are sufficiently high, the greater the number of alternate candidates for redundant transmission of data. Moreover, the greater the signal strength the fewer errors are likely to occur. Thus, the closer and more powerful the cell transmitters are together, the fewer the cells must be coordinated to enable a sufficiently low bit error rate and the fewer divisions of data and slots required in the slicing patterns. However, where the topology involves a sparsely populated network, and minimal overlap between cells exists, every cell in a single slicing area may have to be coordinated. Thus, algorithms for creating and/or selecting slicing patterns, and coordination of their use, should be designed to adapt with variations in network design and network topology.

As described, the design and selection of the algorithm or algorithms for managing a particular resource may be chosen according to the specific characteristics desired of the system, which may include low error rates, enhanced communication performance, improved processing speed, reduced cost, and other such factors. For instance, the number of slicers and/or the number of slice area managers may be selected to reduce overall hardware costs. On the other hand, the addition of components may improve scheduling and network performance. Moreover, the network design may be determined according to the needs and/or the topology of the network. Thus, the preceding description of exemplary criteria for selecting an algorithm or arrangement of components is intended solely for purposes of illustration and is not intended to limit the scope of criteria that may be used for designing or selecting an algorithm or an arrangement of components.

Preferred embodiments of the invention have been described for purposes of illustration only. Although specific steps for selecting a slicing pattern were specifically described, as previously discussed, variations of those steps, including their modification, deletion, or the provision of additional steps are well within the scope of the invention.

While an exemplary embodiment described use of a time slicing system employing time division multiple accessing, the invention is not so limited. Indeed, any multiple accessing techniques for which resource allocation may be desired may benefit from the implementation of various aspects of the present invention. As noted, code, frequency, and other resource slicing techniques may also be used in accordance with various aspects of the present invention.

While an exemplary embodiment described use of a resource allocation technique for use in a cellular network, aspects of the preferred invention are applicable to any communication network in which resource allocation may be desirable. For example, aspects of the preferred embodiment are applicable to broadcast network systems. Moreover, while an exemplary embodiment described use of a resource allocation technique in a mobile IP network, alternative networks including general packet based systems are similarly encompassed within the scope of the present invention. Furthermore, communications employing unidirectional and/or bi-directional transmissions may employ aspects of the present invention.

## Claims

1. A system for transmitting data to a portable device over a wireless network, comprising:
a first resource slicer transmitting data to the portable device in accordance with a first pattern of transmitting data at selected times;
a second resource slicer transmitting the same data to the portable device in accordance with a second pattern of transmitting data at selected times; and
a slicing area manager, wherein the slicing area manager schedules the transmission of data from the first and second resource slicers such that different data is transmitted for each selected time.

2. The system according to claim 1 wherein the wireless network is a cellular network.

3. The system according to claim 1 wherein the wireless network is a packet based network.

4. The system according to claim 1 wherein the wireless network is a mobile Internet network.

5. The system according to claim wherein the wireless network is a broadcast network.

6. The system according to claim 1 wherein the data is formed into groups for transmission.

7. The system according to claim 6 wherein the groups of data are formed from grouping together service groups.

8. The system according to claim 1 wherein the resource slicers buffer data for transmission to the portable device.

9. The system according to claim 1 wherein the system includes one or more processors that calculate the transmission schedule for transmitting data to the portable device over multiple channels, wherein each channel is assigned to a coverage area within the wireless network.

10. The system according to claim 9 wherein the one or more processors schedule the transmission of at least some of the same data to the portable device over different network resources at non-overlapping times.

11. The system according to claim 9 wherein the one or more processors schedule the start of the transmission of data to the portable device over different network resources at different times.

12. The system according to claim 9 wherein the transmissions use network resources corresponding to channels within the wireless network, and the one or more processors schedule the transmission of data to the portable device over each of the channels at partially overlapping times.

13. The system according to claim 9 wherein the transmissions use network resources corresponding to codes in a code division multiple access transmission scheme and the slicing area manager schedules the transmission of data to the portable device using different codes of a code division multiple-access network.

14. The system according to claim 9 wherein the transmissions use network resources corresponding to codes in a code division multiple access transmission scheme and the slicing area manager schedules the transmission of the same data to the portable device using the same code at non-overlapping times.

15. The system according to claim 9 wherein the one or more processors schedule the transmission over a single communication link of different data to the portable device using different codes at different times.

16. The system according to claim 9 wherein the one or more processors schedule the transmission of data to the portable device using different frequencies of a frequency division multiple-access network.

17. The system according to claim 16 wherein the one or more processors schedule the transmission of data to the portable device over each of the different frequencies at non-overlapping times.

18. The system according to claim 1 further including a plurality of slicing area managers and at least one network slicing manager coupled to the slicing area managers for coordinating the management of data transmissions.

19. The system according to claim 9 wherein if the portable device fails to properly receive data transmitted over a first channel, the portable device receives data transmitted over a second channel based on a schedule for transmitting the data.

20. The system according to claim 19 wherein the channels comprise areas relating to one or more cells.

21. The system according to claim 9 wherein the first resource slicer transmits a notification to the portable device indicating a schedule for transmitting data in a second area by the second resource slicer which is used if the portable devices fails to properly receive data transmitted in a first area.

22. The system according to claim 1 wherein the first resource slicer and the second resource slicer each form part of separate devices within the network.

23. The system according to claim 1 wherein the first resource slicer, the second resource slicer, and the slicing area manager each form part of separate devices within the network.

24. A system for communicating data to a portable device over a wireless network, comprising:
a resource slicer that organizes data, intended for transmission to the portable device over a plurality of transmitters, for transmission in multiple coverage areas at selected times; and
a slicing area manager that schedules the transmission of the data over each of the plurality of transmitters and further scheduling the transmission of the data at different times in each of the respective coverage areas.

25. The system according to claim 24, wherein the slicing area manager schedules the transmission of the same data at different times over different channels within the wireless network.

26. The system according to claim 24, wherein the slicing area manager schedules the transmission of the same data at different times using different spreading codes.

27. The system according to claim 24, wherein the slicing area manager schedules the transmission of the same data at different times using different frequencies.

28. The system according to claim 24 wherein the data is formed into groups for transmission.

29. The system according to claim 28 wherein the groups of data are formed from grouping together service groups.

30. A portable device for performing wireless communications over a wireless network, the device including,
a communications unit that receives groups of data at selected times over the wireless network;
a processor that detects an unsuccessful communication of a group of data; and
a transmission selection unit that selects an alternative communication resource from which the communications unit can receive the unsuccessfully communicated group of data in accordance with schedule information indicating the alternative resource at which the unsuccessfully communicated group of data will be transmitted.

31. The portable device according to claim 30, wherein the processor detects an unsuccessful communication based on a detected rate of error contained in the received data.

32. The portable device according to claim 30, wherein the processor detects an unsuccessful communication based on the loss of a connection with the network.

33. The portable device according to claim 30, wherein the communications unit receives the schedule information from a network device.

34. The portable device according to claim 30, wherein the schedule information is determined based on a predictive transmission algorithm for learning the time at which the data unsuccessfully communicated will be retransmitted.

35. The portable device of claim 30, wherein:
the processor instructs the communications unit to connect to a neighboring cell before the portable device exits the area corresponding to the cell in which the portable device is located.

36. The portable device of claim 30, wherein:
the processor instructs the communications unit to connect to one or more neighboring cells while connected to the cell in which the portable device is located.

37. The portable device of claim 30, wherein:
the processor instructs the communications unit to connect to a neighboring cell while connected to the cell in which the portable device is located;
the processor further detects error in at least one group of data received over one of the channels to which the portable device is connected; and
the processor controls the portable device to extract data from another channel to which the portable device is connected.

38. A method of communicating over a wireless network with a portable communication device, comprising:
receiving data to be transmitted to the portable device;
organizing the received data into segments for transmission; and
scheduling the transmission of each of the segments of data over each of a plurality of channels at different times.

39. The method according to claim 38, wherein each channel over which the segments of data are to be transmitted corresponds to a cell of a cellular network, and the method further comprising selecting channels for transmission of the segments of data corresponding to cells neighboring the cell in which the portable device is located.

40. The method according to claim 39, further comprising transmitting the segments of data over the channel corresponding to the cell in which the portable device is located.

41. The method according to claim 39, further comprising developing a schedule for the transmission of each segment of data over each channel corresponding to neighboring cells at non-overlapping times.

42. The method according to claim 38, further comprising inserting a delay between the transmission of each segment of data.

43. The method according to claim 38, wherein organizing the received data into segments for transmission further comprises grouping the incoming data into groups that benefit from being delivered together in a single segment.

44. The method according to claim 38, wherein scheduling the transmission of each of the segments of data over each of a plurality of channels at different times includes initiating the transmission of each of the segments of data over a plurality of channels at different times.

45. A method of communicating data over a wireless network with a portable communication device, comprising:
splitting data into at least a first group of data (G1) and a second group of data (G2) for transmission of the first (G1) and second (G2) groups of data in at least two adjacent cell areas; and
scheduling the transmission of the first group of data (G1) in at least a first adjacent cell area (A1) and a second adjacent cell area (A2) such that completion of the transmission of the first group of data (G1) in the first adjacent cell area (A1) occurs at a time spaced apart from the start of transmission of the first group of data (G1) in the second adjacent cell area (A2).

46. The method according to claim 45, wherein initiation of the transmission of at least the first group of data (G1) and the second group of data (G2) in at least the first adjacent cell area (A1) and the second adjacent cell area (A2) occur at different times.

47. The method according to claim 45, wherein upon completion of the transmission of the first group of data (G1) in the first adjacent cell area (A1), transmitting a second group of data (G2) in the first adjacent cell area (A1).

48. The method according to claim 45, wherein the time spacing between the completion of the transmission of the first group of data (G1) in the first adjacent cell area (A1) and the start of transmission of the first group of data (G1) in the second adjacent cell area (A2) is dependent on the number of adjacent cell areas over which the data is to be transmitted.

49. The method according to claim 45, wherein the time spacing between the completion of the transmission of the first group of data (G1) in the first adjacent cell area (A1 ) and the start of transmission of the first group of data (G1) in the second adjacent cell area (A2) is dependent on the number of groups of data to be transmitted over the adjacent cell areas and the number of adjacent cell areas over which the data is to be transmitted.

50. The method according to claim 45, wherein if the number of adjacent cell areas over which data is to be transmitted are fewer than the number of groups to be transmitted, the time spacing between the completion of the transmission of the first group of data (G1) in the first adjacent cell area (A1) and the start of transmission of the first group of data (G1) in the second adjacent cell area is (A2) shorter than the time for transmitting the first group of data (G1).

51. The system according to claim 45 wherein the groups of data are formed from grouping together service groups.

52. A method of communicating with a portable communication device over a wireless network, comprising the steps of:
organizing data to be transmitted to the portable device into segments for transmission to the portable device;
scheduling the transmission of each segment of data such that transmission of each segment of data over each of a plurality of areas of the network is initiated at different times;
establishing a connection between the portable device and the transmitter of one or more neighboring areas; and
transmitting each data segment over the plurality of areas of the network at different times.
